Europäisches Patentamt

European Patent Office

Office européen des brevets

(11) Numéro de publication : **0 346 180 B1**

## (12) FASCICULE DE BREVET EUROPEEN

(45) Date de publication du fascicule du brevet :
24.02.93 Bulletin 93/08

(51) Int. Cl.⁵ : **H04L 9/00**

(21) Numéro de dépôt : **89401451.3**

(22) Date de dépôt : **26.05.89**

(54) **Dispositif de communication sécurisée de données.**

(30) Priorité : **03.06.88 FR 8807448**

(43) Date de publication de la demande :
**13.12.89 Bulletin 89/50**

(45) Mention de la délivrance du brevet :
**24.02.93 Bulletin 93/08**

(84) Etats contractants désignés :
**DE ES GB IT**

(56) Documents cités :
**PROCEEDINGS OF THE 1982 INTERNATIO-
NAL ZURICH SEMINAR ON DIGITAL COMMU-
NICATIONS, MAN-MACHINE INTERACTION,
9-11 mars 1982,Zurich, pages 87-92; M. DAVIO
et al.: "Methodology in information security.
Mutual authentication procedures. Application to accesscontrol"**

(56) Documents cités :
**COMPUTERS & SECURITY, vol. 6, no. 3, juin
1987, pages 206-218, Elsevier Science Publis-
hers B.V. (North-Holland),Amsterdam, NL; K.
RIHACZEK: " TeleTrusT-OSIS and communi-
cation security"
IBM TECHNICAL DISCLOSURE BULLETIN,
vol. 26, no. 1, juin 1983, pages 199-201, New
York, US; W.D. HOPKINS:
"Transactionincrementing message authenti-
cation key"**

(73) Titulaire : **FRANCE TELECOM
6, Place d'Alleray
F-75015 Paris (FR)**

(72) Inventeur : **Pailles, Jean-Claude
4, rue des Loisiers
F-14160 Epnon (FR)**
Inventeur : **Girault, Marc
15, rue du Clos Beaumois
F-14000 Caen (FR)**

(74) Mandataire : **Plaçais, Jean-Yves et al
Cabinet Netter, 40, rue Vignon
F-75009 Paris (FR)**

## Description

L'invention concerne la communication sécurisée de données entre une pluralité d'utilisateurs.

Il est fréquent d'assurer des communications sécurisées entre les différents utilisateurs en utilisant des moyens de chiffrement mettant en oeuvre des clés de chiffrement et implantés au sein de postes utilisateurs. Un poste utilisateur peut être affecté à un seul utilisateur ou bien à plusieurs utilisateurs différents. Bien que la notion de communication entre les utilisateurs se matérialise généralement, par des connexions entre les postes utilisateurs, cette notion doit être prise dans son sens le plus large. Ainsi, par exemple, on peut envisager le cas où les postes utilisateurs utilisés pour le traitement proprement dit des messages à communiquer, ne sont pas connectés, la communication s'effectuant alors par d'autres moyens.

Au sens de la présente invention, la notion de communication sécurisée comprend l'un au moins des concepts suivants,
- l'authentification d'un utilisateur vis-à-vis d'un autre utilisateur, cette authentification permettant ainsi d'assurer l'origine des messages;
- la certification de cette authentification par une autorité à laquelle appartient une famille d'utilisateurs, cette certification permettant d'assurer l'appartenance d'un utilisateur à ladite famille;
- l'intégrité d'un message communiqué, généralement par l'utilisation d'une signature accompagnant le message, cette signature étant le chiffrement d'un condensé du message;
- la mise à la clé, c'est-à-dire l'échange par deux utilisateurs d'informations chiffrées à des fins de constitution d'une clé de chiffrement qui leur permettra à l'aide des moyens de chiffrement du type à clé secrète, par exemple DES (Data Encryption Standard) de se communiquer des messages de façon chiffrée.

Deux grandes familles de moyens de chiffrement peuvent être distinguées :
- les moyens de chiffrement du type symétrique et
- les moyens de chiffrement du type asymétrique.

Les moyens de chiffrement du type symétrique, tels que ceux utilisant l'algorithme DES, permettent d'assurer l'intégrité des messages ainsi que l'authentification des utilisateurs. Pour ce dernier concept, un premier utilisateur peut envoyer à un deuxième utilisateur un aléa que le deuxième utilisateur peut signer et renvoyer au premier utilisateur. Le premier utilisateur vérifie ainsi que son interlocuteur est bien détenteur de la clé de chiffrement. Cependant, le rôle du deuxième utilisateur signataire de l'aléa et du premier utilisateur vérifiant la signature de cet aléa ne sont pas bien séparés puisque ce premier utilisateur possédant la clé de chiffrement est en mesure de signer à la place du deuxième utilisateur. Aussi, est-il nécessaire de générer des signatures électroniques de messages vérifiables par tout autre utilisateur voulant s'assurer de l'authenticité des messages et de son auteur mais impossibles à imiter par quiconque. C'est l'intérêt des moyens de chiffrement du type asymétrique.

Dans l'utilisation de tels moyens de chiffrement du type asymétrique, chaque utilisateur possède une clé publique et une clé secrète, la clé publique pouvant être diffusée aux autres utilisateurs car ne permettant pas, par définition des moyens de chiffrement du type asymétrique, de retrouver la clé secrète. Il existe plusieurs moyens de chiffrement du type asymétrique, basés sur l'arithmétique dans l'ensemble des entiers modulo un entier de travail n. Au sens de la présente invention, un entier modulo n est un ensemble d'entiers ordinaires à savoir l'ensemble de tous les entiers se déduisant d'un entier donné par addition d'un multiple quelconque de n. L'ensemble des entiers modulo n est noté Zn.

Parmi les moyens de chiffrement du type asymétrique, celui utilisant l'algorithme à clé publique RSA (Rivest Shamir Adleman) est actuellement employé dans certains dispositifs de communication. Un tel dispositif, utilisant l'algorithme RSA, permet d'assurer les concepts d'authentification (par l'utilisation d'une clé publique propre à chaque utilisateur), d'intégrité (envoi de signatures accompagnant les messages) et de mise à la clé (échange d'une clé de chiffrement d'algorithme symétrique).

A chaque utilisateur est associé un entier d'identification et un annuaire peut stocker les couples entier d'identification/clé publique, mais l'intégrité de cet annuaire et des liaisons utilisateurs/annuaire doivent alors être assurées ce qui entraîne une complication importante. Pour pallier cet inconvénient une possibilité est qu'une autorité certifie l'entier d'identification et la clé publique de chaque utilisateur en délivrant un certificat.

Dans la suite du texte, pour des raisons de simplicité, on confondra les dénominations poste utilisateur et utilisateur puisqu'un poste utilisateur est employé pour une communication donnée par un seul utilisateur. On parlera donc notamment de l'entier d'identification ou de la clé publique du poste utilisateur étant entendu que cet entier d'identification peut dépendre des caractéristiques propres de chaque utilisateur.

Lorsqu'un premier poste utilisateur veut communiquer avec un second poste utilisateur, le premier poste utilisateur va donc envoyer son message, la signature de son message et son certificat. Le second utilisateur va devoir d'abord traiter le certificat pour vérifier ainsi la clé publique du premier poste utilisateur et s'assurer donc que ce dernier appartient bien à l'autorité puis vérifier ensuite la signature du message. Si le certificat

EP 0 346 180 B1

était altéré par un fraudeur celui-ci ne serait pas reconnu valide par le second poste utilisateur puisque seule l'autorité connaît la clé de chiffrement nécessaire pour calculer tout certificat de clé publique.

Un dispositif de communication utilisant un algorithme à clé publique comme RSA présente des inconvénients. En effet la personnalisation du poste utilisateur est assez compliquée : elle requiert la recherche de nombres premiers "forts", tâche assez complexe à réaliser pour (par exemple) un microprocesseur 8 bits. D'autre part, l'algorithme RSA est lourd à mettre en oeuvre par le grand nombre d'opérations nécessaires aux divers chiffrements. Enfin, un tel algorithme doit être sérieusement règlementé car il peut être utilisé pour faire du chiffrement de messages complets.

Il existe d'autres moyens de chiffrement du type asymétrique plus légers à mettre en oeuvre mais ne permettant pas d'assurer à la fois les quatre concepts de sécurité tels que définis ci-avant. Notamment certains de ces moyens de chiffrement ne permettent pas d'assurer le concept de certification.

L'invention remédie à ces inconvénients en proposant un dispositif de communication sécurisée de données permettant notamment d'assurer le concept de certification par une personnalisation simplifiée du poste utilisateur et permettant si nécessaire d'assurer les autres concepts de sécurité.

Un autre but de l'invention est d'utiliser des moyens faciles à mettre en oeuvre et ne nécessitant pas un trop important nombre de calculs opératoires.

L'invention a encore pour but de proposer un dispositif ne permettant pas un détournement possible à des fins de chiffrement de messages complets donc ne nécessitant pas de règlementation stricte.

L'invention a donc pour objet un dispositif de communication, comprenant un poste utilisateur muni de moyens de traitement comportant :

- des premiers moyens de mémorisation pour mémoriser un entier premier e ainsi qu'un entier de travail n, cet entier de travail étant de grande taille et égal au produit de deux entiers premiers p et q,
- des premiers moyens de calcul sur l'ensemble des nombres entiers modulo l'entier de travail n, ces premiers moyens de calcul étant aptes à effectuer des opérations internes dans cet ensemble telle qu'une première opération dite produit, une deuxième opération dite élévation à la puissance, et lesdits moyens de calcul étant propres au chiffrement de données, à l'aide d'un entier d'authentification V propre au poste utilisateur et déterminable à partir de l'entier premier e sous réserve de connaître la factorisation de n en produit de p et q, caractérisé en ce que le reste de la division du produit (p-1).(q-1) par l'entier e est différent de 0,
- en ce que les premiers moyens de mémorisation sont propres à mémoriser un entier choisi b tel que b modulo p soit générateur de l'ensemble des entiers modulo p non nuls et tel que b modulo q soit générateur de l'ensemble des entiers modulo q non nuls,
- en ce que le poste utilisateur comporte en outre des seconds moyens de mémorisation propres à mémoriser un entier s de grande taille propre au poste utilisateur,
- et en ce que lesdits premiers moyens de calcul sont propres à établir un entier auxiliaire A défini comme étant le produit V par l'entier b élevé à la puissance s,

ce qui permet au poste utilisateur de communiquer l'entier auxiliaire A afin de s'authentifier sans que cette communication permette de déterminer la valeur d'authentification V.

Très avantageusement, le poste utilisateur comprend une enceinte de sécurité à l'intérieur de laquelle sont situés au moins les premiers moyens de calcul et les seconds moyens de mémorisation.

Dans un mode préféré de réalisation, le dispositif selon l'invention comprend des moyens de traitement supplémentaires aptes à générer les deux entiers premiers p et q, pour établir l'entier de travail n, ainsi que les entiers e et b; les moyens de traitement supplémentaires sont avantageusement aptes à effectuer l'opération inverse, dite racine, de ladite deuxième opération, et l'opération inverse dite division de ladite premièrtion et, sont propres à déterminer l'entier d'authentification V à partir d'un entier d'identification I propre au poste utilisateur, V étant égal à la division de l'entier 1 par la racine e-ième de I.

De préférence, l'entier d'identification I est différent d'un multiple d'un entier k différent de 1 élevé à la puissance e.

Très avantageusement, les moyens de traitement comportent en outre des moyens de génération d'un entier aléatoire x, de préférence de très grande taille, situés à l'intérieur de l'enceinte de sécurité.

Dans un mode de réalisation du dispositif, les premiers moyens de mémorisation sont propres à mémoriser des informations définissant une fonction auxiliaire h à deux variables y1 et y2, le poste utilisateur comprenant alors des seconds moyens de calcul sur l'ensemble des nombres entiers modulo n propres à établir un entier de condensation c, tel que le reste de la division de c par e soit différent de 0, et défini comme étant la valeur de la fonction h avec, pour première variable $y_1$ un entier y dépendant de l'entier aléatoire x, et avec pour deuxième variable $y_2$ un message M, la fonction auxiliaire h étant alors dépourvue d'ambiguïté vis-à-vis du message M et quasi-biunivoque vis-à-vis du couple formé par l'entier y et le message M.

De préférence, la taille de l'entier de condensation c est inférieure à la taille de l'entier e et l'entier y est

3

l'élévation de l'entier aléatoire x à la puissance e.

Les premiers moyens de calcul peuvent être propres à établir un entier z défini comme étant le produit de x, par l'entier b élevé à la puissance s.c.

Dans une première variante de l'invention, les deux entiers y et z constituent une première signature chiffrée du message, et dans une deuxième variante de l'invention, les deux entier z et c constituent une deuxième signature chiffrée du message.

Dans un mode de réalisation du dispositif, celui-ci comprend un poste utilisateur frère comportant des premiers moyens de calcul frères analogues aux premiers moyens de calcul ainsi que des premiers et seconds moyens de mémorisation frères analogues aux premiers et seconds moyens de mémorisation, lesdits premiers moyens de mémorisation frères contenant les entiers e, n, b.

Avantageusement, le poste utilisateur frère comporte des seconds moyens de calcul frères analogues aux seconds moyens de calcul, les entiers I, A, le message M et la signature chiffrée étant alors communiqués au poste utilisateur frère, les seconds moyens de calcul frères étant alors propres à déterminer l'entier de condensation c par la relation c=h(y.M) et les premiers moyens de calcul frères étant propres à établir un premier entier intermédiaire t égal à $y.(A^e.I)^c$ et un second entier intermédiaire u égal à l'élévation de z à la puissance e puis étant propres à comparer les premier et deuxième entiers intermédiaires t et u, le résultat de cette comparaison permettant de déterminer le caractère correct de la communication du message.

Dans une autre variante de l'invention, les premiers moyens de calcul frères sont aptes à effectuer l'opération inverse de la première opération, dite division et sont propres à effectuer la succession des étapes suivantes :

a) détermination d'un troisième entier intermédiaire t3 égal à l'élévation à la puissance c du produit $A^e.I$,

b) détermination d'un quatrième entier intermédiaire t4 égal à la division de l'entier 1 par l'entier t3,

c) détermination d'un cinquième entier intermédiaire t5 gal au produit de l'entier z élevé à la puissance e par l'entier intermédiaire t4,

d) détermination d'un sixième entier intermédiaire t6 égal à la valeur de la fonction auxiliaire h dans laquelle la première variable y1 est égale à l'entier t5 et dans laquelle la seconde variable y2 est égale au message M,

e) comparaison de l'entier t6 avec l'entier de condensation c, le résultat de cette comparaison permettant de déterminer le caractère correct de la communication du message.

La fonction auxiliaire h peut être une partie prédéterminée de la fonction OU EXCLUSIF des deux variables y1 et y2.

La fonction h peut être aussi une partie prédéterminée d'une fonction de condensation g des deux variables y1 et y2.

Dans ce dernier cas, la fonction g peut être une fonction de condensation de type itératif ou bien encore peut comprendre l'utilisation d'un algorithme du type à clé secrète en mode bouclé.

Dans une autre variante de l'invention, les premiers moyens de calcul sont propres à établir une première partie d'une clé de chiffrement dépendant de l'entier aléatoire x, cette première partie étant communiquée au poste utilisateur frère, les premiers moyens de calcul frères étant alors propres à établir à partir de ladite première partie et de l'entier s', frère de l'entier s, contenu dans les moyens de mémorisation frères, la totalité de ladite clé de chiffrement.

Avantageusement, la première partie de la clé de chiffrement est égale à l'entier b élevé à la puissance x.

De préférence, la clé de chiffrement est égale à l'élévation à la puissance e.s' de ladite première partie.

Très avantageusement, les premiers moyens de calcul déterminent également la clé de chiffrement à partir de l'entier aléatoire x, des entiers auxiliaires A' et l'entier d'identification I' du poste utilisateur frère, la clé de chiffrement étant égale à l'élévation à la puissance x du produit $A'^e.I'$.

Dans un mode de réalisation du dispositif, celui-ci comporte une première station-autorité comprenant lesdits moyens de traitement supplémentaires et communiquant les entiers e, n, b à une première famille de postes utilisateurs.

Dans un autre mode de réalisation du dispositif, celui-ci comporte une deuxième station-autorité comprenant des moyens de traitement supplémentaires frères et communiquant des entiers frères e2, n2, b2 à une deuxième famille de postes utilisateurs.

Très avantageusement, la première station-autorité communique à la deuxième station-autorité une signature d'un message particulier dépendant des entiers e2, n2, b2, obtenue à l'aide des entiers e, n, b, et la deuxième station-autorité communique à la première station-autorité une signature d'un message particulier dépendant des entiers e, n, b, obtenue à l'aide des entiers e2, n2, b2.

Très avantageusement, la taille de l'entier de travail n est de 512 bits tandis que la taille de l'entier premier e est de 65 bits alors que la taille de l'entier de condensation c est de 64 bits. De préférence, la taille de l'entier aléatoire x est de 512 bits ainsi que celle de l'entier b alors que la taille de l'entier s est de 64 bits.

Dans un mode de réalisation particulièrement préféré, les premiers moyens de calcul comprennent un contrôleur du type de celui décrit dans la Demande de Brevet français n° 87 05144.

D'autres avantages et caractéristiques de l'invention apparaîtront à l'examen de la description détaillée ci-après et des dessins annexés sur lesquels :

- la figure 1 est une représentation schématique d'un premier mode de réalisation du dispositif selon l'invention,
- la figure 2 est une représentation schématique d'un poste utilisateur du dispositif de la figure 1,
- la figure 3 est une représentation schématique d'une première station-autorité du dispositif de la figure 1,
- la figure 4 illustre le dialogue entre la première station-autorité et le poste utilisateur de la figure 2,
- la figure 5 est un organigramme d'un premier mode de fonctionnement du dispositif selon l'invention,
- la figure 6 est un organigramme d'un deuxième mode de fonctionnement du dispositif selon l'invention,
- la figure 7 est un organigramme d'un troisième mode de fonctionnement du dispositif selon l'invention,
- la figure 8 est une représentation schématique d'un deuxième mode de réalisation du dispositif selon l'invention, et,
- la figure 9 est un organigramme d'un mode particulier de fonctionnement du dispositif de la figure 8.

Les dessins comportant pour l'essentiel des éléments de caractère certain font partie intégrante de la description. Il en est de même de la Demande de Brevet français n°87 05144. A ce titre, les dessins annexés ainsi que la Demande de Brevet français n°87 05144 pourront servir non seulement à mieux faire comprendre la description détaillée ci-après mais aussi contribuer, le cas échéant, à la définition de l'invention.

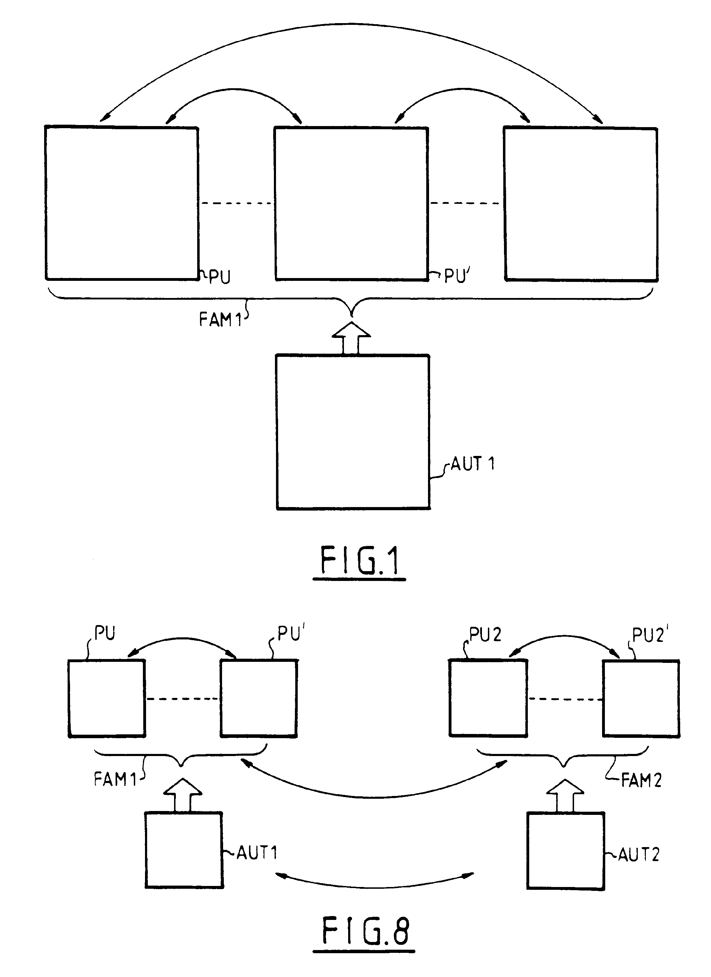

Sur la figure 1 on voit que l'on a représenté une pluralité de postes utilisateurs appartenant à une même famille FAM1. La référence PU est affectée à un poste utilisateur tandis que la référence PU′ est affectée à un poste utilisateur frère de la famille FAM1. Cette famille est supervisée par une station-autorité AUT1.

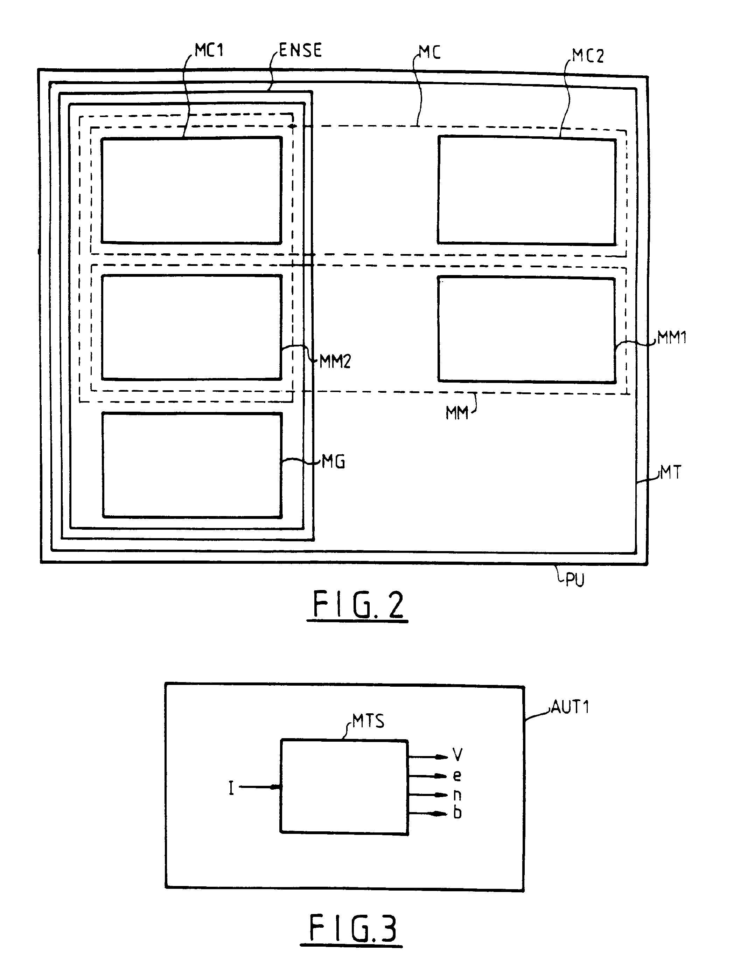

Un poste utilisateur PU, tel que représenté sur la figure 2, comporte des moyens de traitement MT comprenant des premiers moyens de calcul MC1 et des seconds moyens de calcul MC2 ainsi que des premiers moyens de mémorisation MM1 et des seconds moyens de mémorisation MM2. Les moyens de traitement MT comportent également des moyens de génération MG d'un nombre aléatoire.

Les premiers moyens de calcul, les seconds moyens de mémorisation et les moyens de génération du nombre aléatoire sont situés à l'intérieur d'une enceinte de sécurité ENSE. Au sens de la présente invention, le concept d'une enceinte de sécurité signifie que l'on ne peut pas accéder, à des fins de fraude par exemple, aux informations contenues à l'intérieur de cette enceinte de sécurité. La raison de l'utilisation d'une telle enceinte de sécurité sera explicitée ci-après.

Les premiers moyens de mémorisation mémorisent un entier premier e dont la taille est de 65 bits ainsi qu'un entier de travail n dont la taille est de 512 bits.

Les premiers moyens de calcul sont aptes à effectuer des opérations internes sur l'ensemble Zn des nombres entiers modulo l'entier de travail n telles qu'une première opération dite produit, son opération inverse dite division ainsi qu'une deuxième opération dite élévation à la puissance.

Il convient ici de remarquer que l'ensemble Zn est un anneau au sens mathématique du terme. Si l'entier n est premier alors Zn est un corps au sens mathématique du terme c'est-à-dire que tout élément sauf 0 a un inverse pour la première opération. Si par contre l'entier de travail n est le produit p.q de deux entiers p, q alors Zn n'est pas un corps. Cependant, lorsque le nombre n a une très grande taille, par exemple 512 bits, p et q pouvant être alors des entiers de 256 bits, l'ensemble Zn est "presqu'un corps". En effet les entiers compris entre 0 et n-1 qui ne sont pas premiers avec n donc qui n'ont pas d'inverse modulo n sont de la forme a0.p ou a1.q. Avec la taille du nombre n choisie et les tailles des nombres p et q, on obtient une densité d'entiers non-inversibles égale à $2^{-255}$. On obtient donc une probabilité infinitésimale ($10^{-80}$) de rencontrer un élément n'ayant pas d'inverse.

Il convient ici également de remarquer qu'étant donné un entier m, le calcul de la division de 1 par m se fait en cherchant des entiers a2 et a3 positifs ou négatifs tels que a2.m+a3.n=1. Ces entiers a2 et a3 existent si les entiers m et n sont premiers entre eux (théorème de BEZOUT) et alors l'entier a2 est égal à la division de 1 par l'entier m. La méthode utilisée est basée sur l'algorithme d'EUCLIDE qui permet le calcul du PGCD (Plus Grand Commun Diviseur) de deux nombres.

Une méthode, pour élever à la puissance a4 un entier m dans Zn consisterait à multiplier l'entier m(a4-1) fois par lui-même. Cependant cette méthode serait trop longue car elle nécessiterait environ $10^{160}$ opérations. Une méthode efficace utilise alors le fait que $(m^{2a4})=(m^2)^{a4}$. Donc (2.a4-1) opérations sont remplacées par a4 opérations. En décomposant a4 en puissance de 2 on voit alors que $m^{a4}$ est calculé en moyenne par 1,5 log2(a4) opérations modulaires du type r.m où r est une variable de travail et la fonction log2 désigne la fonction logarithme à base 2. Si l'entier a4 a une taille de 512 bits on a donc seulement 768 opérations modulaires en

5

EP 0 346 180 B1

moyenne.

Une méthode pour effectuer une opération modulaire du type F.B modulo n est décrite dans la Demande de Brevet français n°87 05 144. On en rappelle ici les principales caractéristiques l'homme de l'art pouvant se référer à la Demande de Brevet français précitée pour plus de détails.

Pour effectuer chacune des opérations F.B modulo n, où F et B ont des valeurs entières représentées par des mots numériques de nb bits, la variable F est fractionnée en $J+1$ mots de tb bits, $F_0,...F_i,...F_J$, où tb est un entier prédéterminé et $J+1$ un entier égal ou immédiatement supérieur au rapport nb/tb. Chacun des mots $F_i$, où i est un entier compris en 0 et J est multiplié par la variable B et le produit de la multiplication est ajouté à un mot numérique de somme T de valeur égale à la somme cumulée des produits antérieurs réduite modulo n, la réduction modulo n du mot de somme T est réalisée en lui soustrayant une quantité $d_i.n$, où $d_i$ est un mot numérique constitué des $tb+1$ bits de poids fort du mot de somme T, à chaque fois qu'il atteint une valeur supérieure ou égale à ladite quantité $d_i.n$.

Pour mettre en oeuvre cette méthode, les premiers moyens de calcul MC1 comprennent des moyens de mémorisation auxiliaires pour mémoriser des informations définissant l'exponentiation modulo n d'un mot numérique, des moyens de calcul auxiliaires pour effectuer des opérations du type $T\pm r.n$ où r est un mot numérique $F_i$ ou $d_i$ et des moyens de commande de ces moyens de mémorisation et de ces moyens de calcul auxiliaires.

La station-autorité AUT1 comporte des moyens de traitement supplémentaires MTS propres à générer deux nombres premiers p et q de façon à former le produit n. Cet entier de travail n sera communiqué à tous les postes utilisateurs de la famille FAM1 et ce quasiment sans risque de détermination des entiers premiers p et q car la recherche de p et q connaissant uniquement n n'a pas de solution pratique à ce jour pour des nombres aussi grands. Une telle équation est donc dite quasiment insoluble car les plus puissants ordinateurs disponibles actuellement passeraient des millénaires pour factoriser de tels nombres avec les meilleurs algorithmes connus à ce jour.

Les moyens de traitement supplémentaires fournissent également un nombre premier e de 65 bits et un entier b tels que b modulo p soit générateur de l'ensemble Zp∗ des entiers modulo p non nuls et tels que b modulo q soit générateur de l'ensemble Zq∗ des entiers modulo q non nuls remarque étant faite qu'ici un entier modulo p nul est égal à l'ensemble des multiples de p. Une telle condition sur b permet de calculer une fonction logarithme de base b dans l'ensemble Zp∗ ou Zq∗. Dans le cas présent, où n est le produit de p et de q, il faut que les entiers e, $p-1$ et $q-1$ soient premiers entre eux. Or puisque e est un entier premier, il suffit donc que e ne divise pas le produit $(p-1).(q-1)$ en d'autres termes il suffit que le reste de la division du produit $(p-1).(q-1)$ par l'entier e soit différent de 0.

Ainsi, la démarche d'une station-autorité sera donc la suivante :
- génération de deux nombres premiers p et q et détermination du produit n=p.q;
- choix d'un entier e premier sur 65 bits et vérification que e ne divise pas le produit $(p-1).(q-1)$;
- choix d'un nombre b au hasard de 512 bits et vérification que b modulo p est générateur de l'ensemble des entiers modulo p non nuls et que b modulo q est générateur de l'ensemble des entiers modulo q non nuls;
- communication à tous les postes utilisateurs de la famille FAM1 dépendant de la station-autorité des entiers e, n et b.

Chaque poste utilisateur PU choisit alors un entier d'identification I qu'il va communiquer à la station-autorité AUT1 afin que celle-ci détermine un entier d'authentification V égal à l'inverse de la racine e-ième de l'entier d'identification

$$I \; : \; V = 1/\sqrt[e]{I}.$$

La fonction racine e-ième, $\sqrt[e]{\phantom{v}}$, est l'inverse de la fonction élévation à la puissance e et nécessite de connaître la factorisation de n en produit de p et q. Comme seule la station-autorité connaît cette factorisation, seule cette dernière peut calculer l'entier d'authentification V.

Cet entier d'authentification V est ensuite communiqué par station-autorité au poste utilisateur. Celui-ci choisit de façon secrète un entier s de grande taille, de préférence de 64 bits, qui lui est propre et qui est l'équivalent d'une clé secrète. A partir de cette clé secrète, de l'entier d'authentification V et de l'entier b, les premiers moyens de calcul déterminent un entier auxiliaire A égal au produit de V par l'entier b élevé à la puissance s $(A=V.b^s)$. Cet entier A joue donc le rôle d'une clé publique et est communiqué à tous les postes utilisateurs.

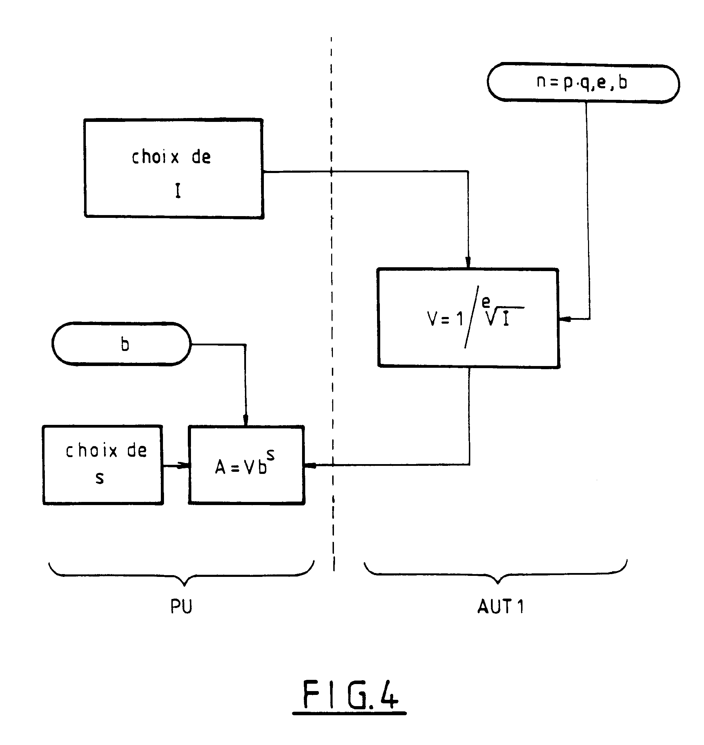

Ce mécanisme d'authentification d'un poste utilisateur est illustré sur la figure 4 et offre une personnalisation simple et sûre du poste utilisateur. En effet, on a déjà vu que l'entier d'authentification V ne pouvait pas être déterminé sans la connaissance de la factorisation de n et l'entier auxiliaire A ne permet pas de déterminer

6

facilement la clé secrète s car cette équation A=V.b$^s$ est, compte tenu de la taille de s, quasi insoluble au sens de la présente invention c'est-à-dire qu'il faudrait des millénaires de temps de calcul avec les ordinateurs les plus puissants existant actuellement pour retrouver s connaissant b et V.

Il convient d'ores et déjà de remarquer que la communication sécurisée du dispositif selon l'invention repose donc sur le fait qu'une équation en w du type b$^w$ est quasi insoluble ainsi qu'une équation en w du type w$^e$ si l'on ne connaît pas la factorisation de n.

L'entier d'identification I d'un poste utilisateur est une valeur binaire obtenue à partir de l'identification de l'utilisateur du poste utilisateur (par exemple à partir du nom, du prénom, de l'adresse). Cet entier d'identification contient également une date de fin d'abonnement. Le format exact de I n'est pas détaillé ici mais I doit vérifier certaines contraintes pour que la valeur d'authentification d'un poste utilisateur frère I' ne puisse être simplement déduite de celle du poste utilisateur notamment par une relation de la forme I'=k$^e$I.

Si tel était le cas alors un utilisateur connaissant V' pourrait déduire simplement V par la relation V'=k.V. Cette contrainte peut être obtenue facilement en structurant I de façon non arithmétique en utilisant par exemple des opérations OU EXCLUSIF ou des inversions bit à bit.

Les premiers moyens de mémorisation MM1 sont propres à mémoriser les informations définissant une fonction auxiliaire h à deux variables y1 et y2 et les seconds moyens de calcul du poste utilisateur sont propres à établir un entier de condensation c qui ne soit pas multiple de l'entier premier e autrement dit tel que le reste de la division de c par e soit différent de 0. Une condition suffisante pour que c ne soit pas multiple de e est que la taille de l'entier c soit inférieure à la taille de l'entier e. C'est pourquoi l'entier c est un nombre de 64 bits. Les caractéristiques de la fonction auxiliaire h seront décrites ci-après.

Le dispositif de communication est donc tel que tous les postes utilisateurs d'une même famille FAM1 ont en commun les entiers e, n, b. Chaque poste utilisateur a un entier d'identification I et une clé publique A qui lui est propre mais qui est divulguée à tous les autres postes utilisateurs de la famille et chaque poste utilisateur a une clé secrète s qui lui est propre et qui n'est pas communiquée aux autres postes utilisateurs de la famille. L'entier auxiliaire A (clé publique) garantit non seulement l'authentification du poste utilisateur mais aussi sa certification par l'autorité AUT1 car celle-ci est la seule à pouvoir déterminer l'entier d'authentification V. Il convient d'ores et déjà de remarquer que tous les modes de fonctionnement décrits ci-après reposeront sur la relation (R) :

$$A^e.I \ = \ b^{e.s}.$$

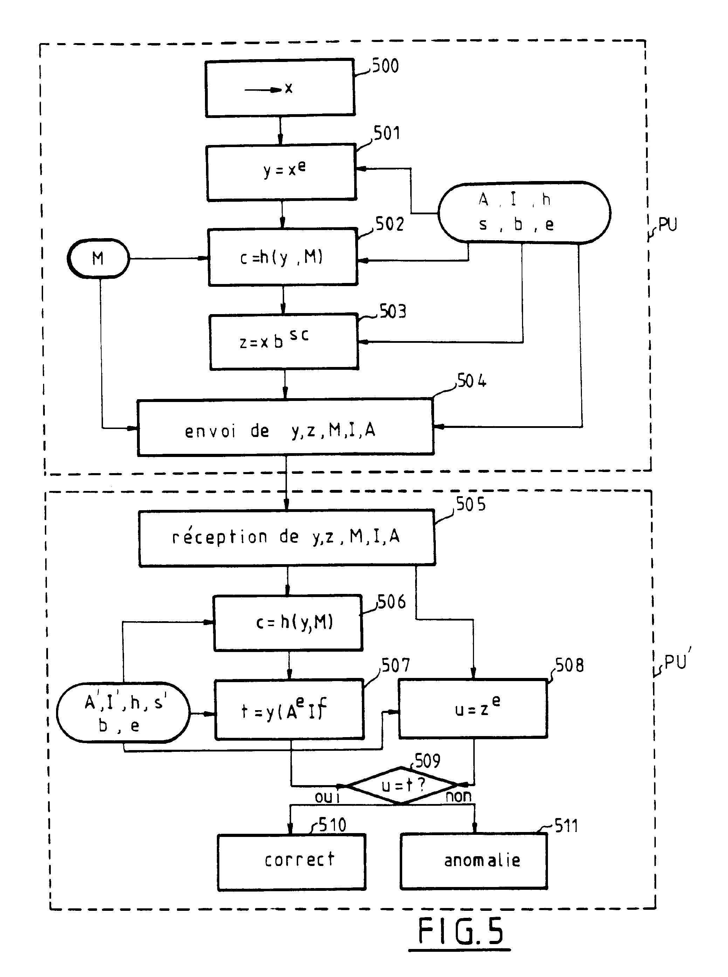

On suppose maintenant dans un premier mode de fonctionnement du dispositif qu'un poste utilisateur PU veuille envoyer un message M accompagné d'une signature afin d'en assurer l'intégrité. Il est fait référence à la figure 5 pour décrire ce premier mode de fonctionnement.

Dans l'étape 500, les moyens de génération MG génèrent un nombre aléatoire x de 512 bits puis déterminent dans l'étape 501 un entier y égal à l'élévation à la puissance e de l'entier aléatoire x. Les seconds moyens de calcul déterminent alors dans l'étape 502 l'entier de condensation c égal à la valeur de la fonction auxiliaire h dans laquelle la première variable y1 est égale à l'entier y et dans laquelle la variable y2 est égale au message M à communiquer. La fonction auxiliaire h doit être dépourvue d'ambiguïté vis-à-vis du message M c'est-à-dire qu'une modification d'un message M en un autre message M' doit provoquer une modification de l'entier de condensation c en un autre entier de condensation c'. La fonction auxiliaire h doit être également quasi-biunivoque vis-à-vis du couple formé par l'entier y et le message M. Au sens de la présente invention, le caractère quasi-biunivoque de la fonction h signifie que l'on ne peut pas modifier à la fois un message M en un message M' et un entier y en un entier y' pour obtenir l'égalité h(y,M)=h(y',M').

Lorsque M est un message court c'est-à-dire un message d'une taille inférieure ou égale à 512 bits, on peut simplement prendre h(y,M) égal à une partie prédéterminée de la fonction OU EXCLUSIF de y et de M comme par exemple 64 bits du résultat de la fonction OU EXCLUSIF. Cette fonction OU EXCLUSIF sera notée **.

Lorsque M est un message long c'est-à-dire d'une taille supérieure à 512 bits, il suffit de prendre la fonction auxiliaire h comme étant une partie prédéterminée, par exemple 64 bits, d'une fonction de condensation q de y et de M. Au sens de la présente invention une fonction de condensation appliquée à un opérande d'une taille donnée fournit un condensé de cet opérande d'une taille réduite.

Cette fonction de condensation g peut être une fonction de condensation du type itératif. Au sens de la présente invention, une fonction de condensation de type itératif est définie de la façon suivante :
si k0 est un nombre public de m octets, si l'on considère les variables y et M comme un message de travail N à condenser, on divise le message N en L blocs $N_l,...N_i,...N_L$ de m-1 octets. On pose alors

$$H_1 = (N_1{}^2 \text{ modulo } k0) ** N_1$$

$$\vdots$$

$$H_i = (H_{i-1} ** N_i)^2 \text{ modulo } k0) ** N_i$$

$$\vdots$$

$$H_L = (H_{L-1} ** N_L)^2 \text{ modulo } k0) ** N_L.$$

On prend alors g(N) =$H_L$.

Avec un tel choix pour la fonction g il est facile de voir que si un fraudeur veut modifier par exemple seulement $N_i$ sans modifier le condensé, il ne peut y parvenir sans avoir à résoudre des équations de degré 2 dans Zn. Or le calcul d'une racine carrée est impossible si la factorisation de k0 n'est pas connue.

La fonction de condensation g peut également comprendre l'utilisation d'un algorithme du type à clé secrète, par exemple DES, en mode bouclé communément appelé en mode CBC (CIPHER BLOCK CHAINING). Ce mode bouclé de DES consiste à chiffrer une première fois un message à l'aide de l'algorithme DES pour obtenir un premier condensé puis de considérer le message et le premier condensé comme un nouveau message et de faire la même opération. On réitère l'opération un nombre prédéterminé de fois et l'on obtient à la fin une signature chiffrée du message égale au dernier condensé obtenu.

Les premiers moyens de calcul déterminent ensuite dans l'étape 503 un entier z défini comme étant le produit $x.b^{s.c}$. La signature du message M est alors constituée des entiers y et z et le poste utilisateur PU communique à un poste utilisateur frère PU′ les entiers y, z, le message M ainsi que l'entier d'identification I et la clé publique A. Il est à noter ici que la communication de l'entier d'identification I et de la clé publique A est facultative si par exemple les postes utilisateurs appartiennent à un réseau muni d'un annuaire que chacun peut consulter.

Le poste utilisateur frère PU′ reçoit dans l'étape 505 les données communiquées à l'étape 504. Ce poste utilisateur PU′ est équipé de premiers et seconds moyens de calcul frères analogues aux premiers et seconds moyens de calcul du poste utilisateur PU ainsi que le premier et second moyens de mémorisation frère analogues aux premiers et seconds moyens de mémorisation du premier poste utilisateur. Dans l'étape 506 les seconds moyens de calcul frères déterminent l'entier de condensation c à partir des données reçues en calculant la valeur de la fonction h(y,M), puis dans l'étape 507 déterminent un premier entier intermédiaire t égal au produit $y.(A^e.I)^c$.

Dans l'étape 508 les premiers moyens de calcul déterminent un deuxième entier intermédiaire u égal à l'élévation de l'entier z à la puissance e. La comparaison des premiers entiers, du premier entier intermédiaire t et du deuxième entier intermédiaire u détermine le caractère correct de la communication du message. En effet, d'après la relation (R) $A^e.I$ est égal à $b^{e.s}$. D'autre part y est égal à $x^e$ donc le premier entier intermédiaire t est égal à $x^e.b^{e.s.c}$, donc est égal à z à la puissance e, donc au deuxième entier intermédiaire u.

Si la comparaison est vérifiée on est donc assuré d'une part de l'intégrité du message M, d'autre part de l'authentification du poste utilisateur origine et enfin de l'appartenance de ce poste utilisateur origine à la station-autorité AUT1.

Si la comparaison s'avère fausse, alors soit un message a été falsifié par un fraudeur, soit il y a erreur sur le poste utilisateur d'origine.

Dans ce premier mode de fonctionnement du dispositif il apparaît que l'entier de condensation c doit dépendre de l'entier y donc du nombre aléatoire x. Si tel n'était pas le cas un fraudeur pourrait fabriquer une fausse signature du message. Pour ce faire les étapes 500, 501, 502 seraient inchangées et dans l'étape 503 il suffirait de choisir z quelconque et de calculer y égal à $z^e/(A^e.I)^c$. Une telle signature ainsi produite serait valide. De plus, ce premier mode de fonctionnement garantit l'intégrité du message car si un fraudeur se fabrique une fausse clé secrète s0 et prend connaissance de I et de A alors la relation (R) n'est pas vérifiée.

Le nombre de calculs nécessaire pour cette première variante est de 192 multiplications modulaires alors que comparativement dans un dispositif de communication utilisant l'algorithme RSA le nombre de calculs serait de 768 multiplications modulaires. Les étapes de vérification comportent 288 multiplications modulaires.

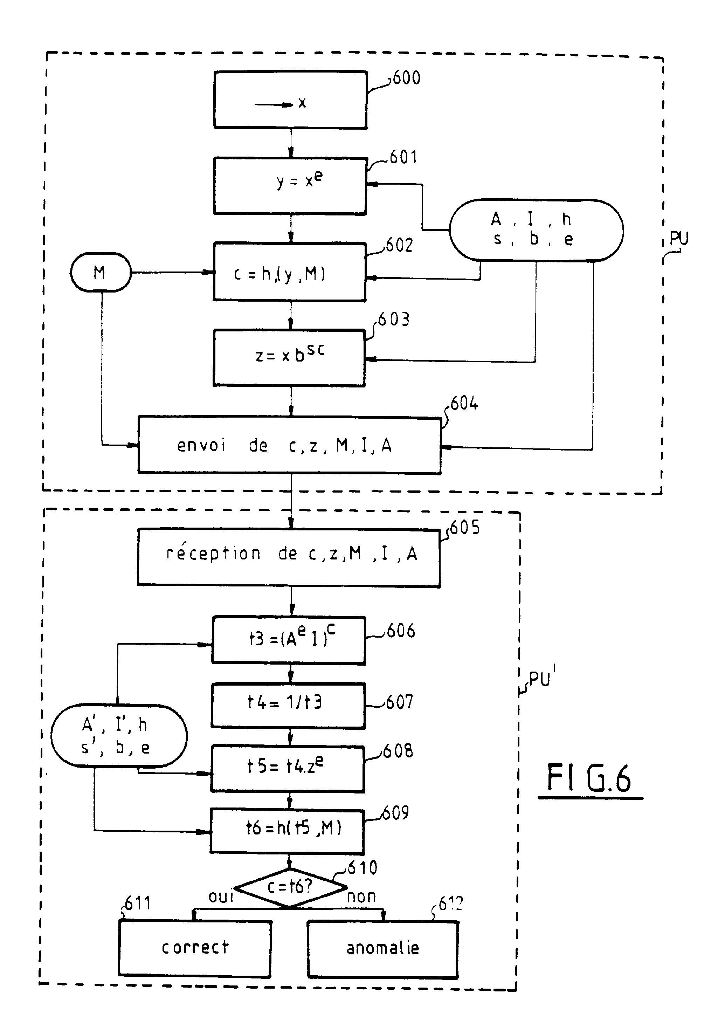

Il est maintenant fait référence à la figure 6 pour illustrer un deuxième mode de fonctionnement du dispositif selon l'invention. Il s'agit également d'un mode de signature de message. Dans ce deuxième mode de fonctionnement, les étapes 600, 601, 602 et 603 sont analogues aux étapes 500 à 503. La signature du message n'est cette fois-ci plus constituée des entiers y et z mais des entiers de condensation c et de l'entier z. Dans l'étape 604 on communiquera donc au poste utilisateur frère PU' les entiers c, z, le message M et les entiers d'identification I et la clé publique A.

Le poste utilisateur frère PU' recevant les données dans l'étape 605, procède à la succession des étapes suivantes :

- étape 606 : établissement d'un troisième entier intermédiaire t3 égal à $(A^e.I)^c$,
- étape 607 : établissement d'un quatrième entier intermédiaire t4 égal à la division de 1 par t3,
- étape 608 : établissement d'un cinquième entier intermédiaire t5 égal au produit de t4 par $z^e$,
- étape 609 : détermination d'un sixième entier intermédiaire t6 égal à h(t5,M),
- étape 610 : comparaison des entiers t6 et c. Si la comparaison s'avère exacte il y a communication correcte du message, si non il y a anomalie.

Ce deuxième mode de fonctionnement présente un avantage car la signature constituée par z et c est plus courte que dans le cas précédent (576 bits au lieu de 1024). Cependant elle nécessite d'effectuer une division ce qui présente un léger inconvénient d'implantation.

L'homme de l'art comprendra qu'il est nécessaire pour assurer la sécurité des communications de loger les premiers moyens de calcul et les seconds moyens de mémorisation dans l'enceinte de sécurité ENSE car le caractère insoluble de certaines équations repose notamment sur la non-connaissance de x par exemple ou de s. Les seconds moyens de calcul et les premiers moyens de mémorisation peuvent être situés en dehors de cette enceinte de sécurité par exemple pour des raisons de capacité-mémoire.

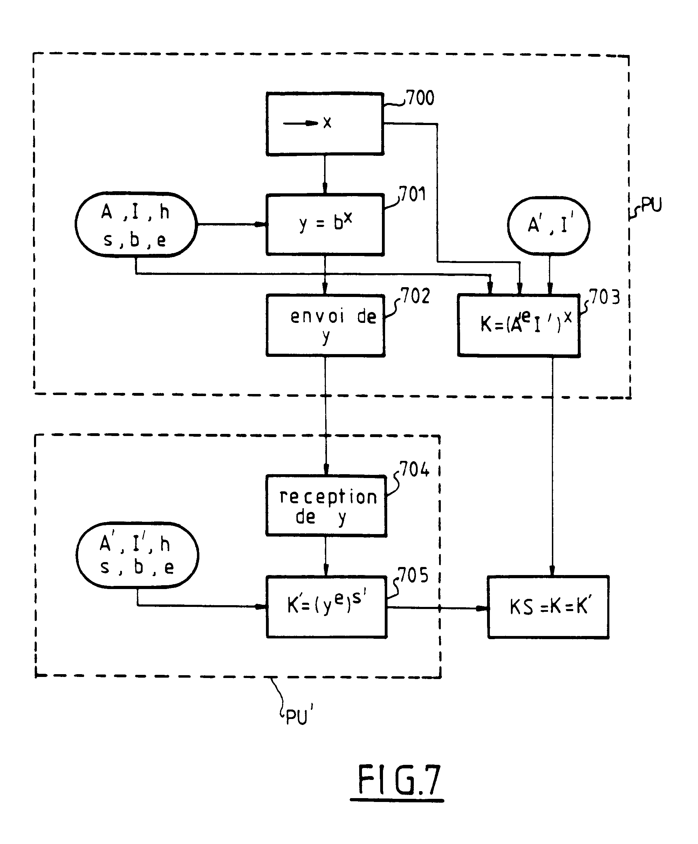

Il est maintenant fait référence à la figure 7 pour illustrer un troisième mode de fonctionnement du dispositif selon l'invention caractéristique d'une mise à la clé entre deux postes utilisateurs d'une même famille. Ces deux postes vont donc calculer une clé de chiffrement commune K.

Les premiers moyens de calcul du poste utilisateur PU génèrent un nombre aléatoire x de 512 bits et calculent dans l'étape 701 un entier y égal à $b^x$. Dans l'étape 702 le poste utilisateur PU communique au poste utilisateur frère PU' l'entier y. A la réception de y par le poste utilisateur PU' (étape 704) celui-ci détermine la clé de chiffrement K' égale à $(y^e)^{s'}$ où s' désigne la clé secrète du poste utilisateur frère PU' analogue à la clé secrète s du poste utilisateur PU.

Parallèlement, le poste utilisateur PU, connaît par exemple par l'interrogation d'un annuaire la clé publique A' et l'entier d'identification I' du poste utilisateur frère PU'. Les premiers moyens de calcul déterminent donc dans l'étape 703 la clé de chiffrement K = $(A'^e.I')^x$.

On vérifie aisément que les entiers K et K' sont égaux et constituent donc bien la clé de chiffrement K entre les deux postes utilisateurs. Ainsi, l'entier y communiqué par le poste utilisateur PU constitue une première partie de la clé de chiffrement K, les premiers moyens de calcul frères déterminant la totalité de la clé de chiffrement K ainsi que les premiers moyens de calcul du poste utilisateur PU. La clé de chiffrement K est variable grâce à l'aléa x mis en jeu par le poste utilisateur PU et peut donc être utilisée effectivement comme clé de travail dans une session ultérieure. La clé K, qui est choisie par le poste utilisateur PU ne peut être connue que du poste utilisateur frère PU' car cette procédure de mise à la clé est basée sur la connaissance par le poste utilisateur frère PU' seul du secret s'. Un fraudeur prenant connaissance des entiers I et y peut obtenir b à la puissance e.x mais pas e.x ni x puisque cette équation est quasiment insoluble au sens de la présente invention. Après la mise à la clé, le poste utilisateur PU peut donc authentifier le poste utilisateur frère PU' en utilisant la clé de chiffrement K et un algorithme symétrique quelconque. Par contre le poste utilisateur frère PU' ne peut pas authentifier le poste utilisateur PU puisque cette procédure n'utilise aucun secret relatif au poste utilisateur PU. Il faut donc si l'on souhaite cette authentification supplémentaire rajouter une procédure de signature telle que celle décrite dans les premier ou deuxième modes de fonctionnement décrits ci-avant ou bien, utiliser cette procédure de mise à la clé dans les deux sens, la clé choisie finalement étant une combinaison des deux demi-clés choisies respectivement par les postes utilisateurs PU et PU'.

L'homme de l'art a remarqué que les trois modes de fonctionnement décrits ci-avant ne nécessitent pas de connexion proprement dite entre les postes utilisateurs ce qui peut être particulièrement avantageux. De plus, il n'est pas possible avec les différents moyens du dispositif selon l'invention d'effectuer un chiffrement de message complet tel qu'il pourrait être réalisé par un algorithme DES ou RSA. Les différents moyens du dispositif permettent seulement éventuellement de générer par le mode de "mise à la clé" une clé de chiffrement utilisable avec par exemple l'algorithme DES.

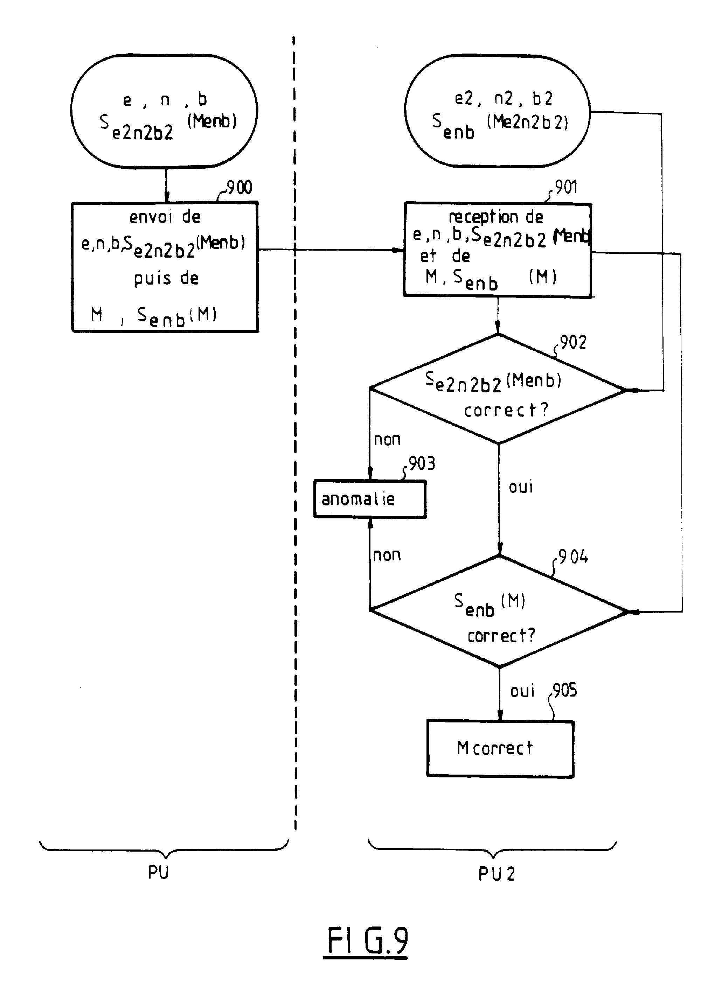

L'homme de l'art a en outre remarqué que les trois modes de fonctionnement décrits ci-avant ne fonctionnent que si les postes utilisateurs font appel à une même station-autorité. En effet les calculs sont fait dans chaque poste utilisateur avec les mêmes constantes e, n, b. Cependant, dans le cas de grands dispositifs de communication il est possible d'avoir des autorités multiples supervisant plusieurs familles de postes utilisateurs. Un tel cas est illustré sur la figure 8 où l'on a supposé que l'on a une première station-autorité AUT1 supervisant une première famille FAM1 de postes utilisateurs PU, PU' et une deuxième station-autorité AUT2 supervisant une deuxième famille de postes utilisateurs PU2 et PU2'. La première station-autorité délivrent les entiers e, n et b tandis que la deuxième station-autorité délivre les entiers frères e2, n2 et b2.

Lorsqu'un poste utilisateur PU de la première famille FAM1 désire communiquer avec un poste utilisateur PU2 de la deuxième famille FAM2 chacun des deux postes doit connaître les constantes e, n et b correspondantes délivrées par la station-autorité de l'autre poste utilisateur. Il est alors nécessaire que, préalablement à toute communication entre deux postes utilisateurs de deux familles différentes, la première station-autorité ait communiqué à la deuxième station-autorité, de façon secrète, la signature $S_{enb}$, d'un message Me2n2b2 dépendant des entiers e2, n2 et b2 obtenue à l'aide des entiers e, n et b. Il est également nécessaire que la deuxième autorité ait communiqué à la première autorité la signature $S_{e2n2b2}$ d'un message Menb dépendant des entiers e, n, b obtenue à l'aide des entiers e2, n2, b2.

La communication entre deux postes utilisateurs appartenant respectivement à la première et à la deuxième familles peut alors s'effectuer et est illustrée sur la figure 9.

Dans l'étape 900 le poste utilisateur PU envoie au poste utilisateur PU2 les entiers e, n, b ainsi que la signature $S_{e2n2b2}$ du message Menb. Le poste utilisateur PU envoie ensuite son message M ainsi que la signature de ce message M à l'aide des entiers e, n et b. Dans l'étape 901, le poste utilisateur PU2 reçoit toutes ces données et vérifie tout d'abord que la signature $S_{e2n2b2}$ du message Menb est correcte. Si tel n'est pas le cas alors il y a anomalie d'autorité et le message est rejeté étape 903 si par contre cette signature est correcte alors le poste utilisateur PU2 connaissant les entiers e, n et b est capable de vérifier la signature du message M dans l'étape 904 et de déterminer si cette communication est correcte (étape 905).

Bien entendu les moyens de signature des messages Menb et Me2n2b2 peuvent être indifféremment ceux décrits dans les premier et deuxième modes de fonctionnement du dispositif. De même, on peut étendre ce schéma à plusieurs stations-autorités par des vérifications en cascade des différentes constantes e, n et b communiquées.

L'invention peut comporter des variantes, notamment les suivantes :
- on a vu précédemment que l'enceinte de sécurité ENSE contenait uniquement les premiers moyens de calcul, les seconds moyens de mémorisation ainsi que les moyens de génération d'un nombre aléatoire. Ceci était la condition minimale requise pour assurer le concept de communication sécurisée. On peut très bien envisager pour des raisons pratiques de regrouper tous les moyens de calcul et/ou tous les moyens de mémorisation dans l'enceinte de sécurité ENSE;
- on peut également envisager que la station-autorité soit un poste utilisateur lui-même pourvu des moyens de traitement supplémentaires dans le cas où ceux-ci seraient suffisamment puissants et peu encombrants pour être logés dans un poste utilisateur.
- Les entiers d'identification I, auxiliaire A peuvent également être mémorisés dans les premiers moyens de mémorisation. De même, bien qu'il ne soit pas nécessaire de mémoriser l'entier d'authentification V, on pourrait envisager de le faire dans les seconds moyens de mémorisation.

Bien entendu certains des moyens décrits ci-dessus peuvent être omis dans les variantes où ils ne servent pas. Ainsi, les seconds moyens de calcul peuvent ne pas être notamment implantés dans le poste utilisateur si la variante de mise à la clé est seule utilisée. De même, on pourrait envisager que seuls les premiers moyens de calcul frères soient aptes à effectuer l'opération division puisque cette opération n'intervient que dans la vérification de la signature d'un message.

Enfin les exemples de tailles des différents entiers mis en jeu (512 bits pour x, 64 bits pour c...) ne sont bien sûr nullement limitatifs.

## Revendications

1. Dispositif de communication, comprenant un poste utilisateur (PU) muni de moyens de traitement (MT) comportant :
   - des premiers moyens de mémorisation (MM1) pour mémoriser un entier premier e ainsi qu'un entier de travail n, cet entier de travail étant de très grande taille et égal au produit de deux entiers premiers p et q,
   - des premiers moyens de calcul (MC1) sur l'ensemble Zn des nombres entiers modulo l'entier de travail n, ces premiers moyens de calcul étant aptes à effectuer des opérations internes dans cet ensemble telle qu'une première opération dite produit et une deuxième opération dite élévation à la puissance, lesdits premiers moyens de calcul étant propres au chiffrement de données, à l'aide d'un entier d'authentification V propre au poste utilisateur (PU) et déterminable à partir de l'entier premier e sous réserve de connaître la factorisation de n en produit de p et q,

caractérisé en ce que le reste de la division du produit (p-1).(q-1) par l'entier e est différent de 0,
- en ce que les premiers moyens de mémorisation (MM1) sont propres à mémoriser un entier choisi b tel que b modulo p soit générateur de l'ensemble Zp∗ des entiers modulo p non nuls et tel que b modulo q soit générateur de l'ensemble Zq∗ des entiers modulo q non nuls,
- en ce que le poste utilisateur (PU) comporte en outre des seconds moyens de mémorisation (MM2) propres à mémoriser un entier s de grande taille propre au poste utilisateur (PU),
- et en ce que lesdits premiers moyens de calcul (MC1) sont propres à établir un nombre entier auxiliaire A défini comme étant le produit de V par l'entier b élevé à la puissance s,

ce qui permet au poste utilisateur (PU) de communiquer l'entier auxiliaire A afin de s'authentifier sans que cette communication permette de déterminer la valeur d'authentification V.

2. Dispositif selon la revendication 1, caractérisé en ce que le poste utilisateur (PU) comprend une enceinte de sécurité (ENSE) à l'intérieur de laquelle sont situés au moins les premiers moyens de calcul (MC1) et les seconds moyens de mémorisation (MM2).

3. Dispositif selon l'une des revendications 1 et 2, caractérisé en ce qu'il comprend des moyens de traitement supplémentaires (MTS), aptes à générer les deux entiers premiers de factorisation p et q, pour établir l'entier de travail n, ainsi que les entiers e et b,

en ce que les moyens de traitement supplémentaires (MTS) sont aptes à effectuer l'opération inverse, dite racine, de ladite deuxième opération et l'opération inverse dite division de ladite première opération,

et en ce que les moyens de traitement supplémentaires sont propres à déterminer l'entier d'authentification V à partir d'un entier d'identification I propre au poste utilisateur, V étant égal à la division de l'entier 1 par la racine e-ième de I.

4. Dispositif selon la revendication 3, caractérisé en ce que l'entier d'identification I est différent d'un multiple d'un entier k, différent de 1, élevé à la puissance e.

5. Dispositif selon la revendication 4, caractérisé en ce que le poste utilisateur comporte en outre des moyens de génération (MG) d'un entier aléatoire x situé à l'intérieur de l'enceinte de sécurité (ENSE).

6. Dispositif selon la revendication 5, caractérisé en ce que l'entier aléatoire x est de très grande taille.

7. Dispositif selon la revendication 5 ou 6, caractérisé en ce que les premiers moyens de mémorisation sont propres à mémoriser des informations définissant une fonction auxiliaire h à deux variables y1 et y2,

en ce que le poste utilisateur comprend des seconds moyens de calcul (MC2) sur l'ensemble des nombres entiers modulo n propres à établir un entier de condensation c, tel que le reste de la division de c par e soit différent de 0, et défini comme étant la valeur de la fonction h, avec pour première variable y1 un entier y dépendant de l'entier aléatoire x et avec pour deuxième variables y2 un message M, la fonction auxiliaire h étant alors dépourvue d'ambiguïté vis-à-vis du message M et quasi-biunivoque vis-à-vis du couple formé par l'entier y et le message M.

8. Dispositif selon la revendication 7, caractérisé en ce que la taille de l'entier de condensation c est inférieure à la taille de l'entier e.

9. Dispositif selon l'une des revendications 7 et 8, caractérisé en ce que l'entier y est l'élévation de x à la puissance e.

10. Dispositif selon l'une des revendications 7 à 9, caractérisé en ce que les premiers moyens de calcul sont propres à établir un entier z défini comme étant le produit de x par l'entier b élevé à la puissance s.c.

11. Dispositif selon la revendication 10, caractérisé en ce que les deux entiers y et z constituent une première signature chiffrée du message M.

12. Dispositif selon la revendication 10, caractérisé en ce que les deux entiers z et c constituent une deuxième signature chiffrée du message M.

13. Dispositif selon l'une des revendications précédentes, caractérisé en ce qu'il comprend un poste utilisateur frère comportant des premiers moyens de calcul frères analogues aux premiers moyens de calcul ainsi que des premier et second moyens de mémorisation frères analogues aux premiers et seconds moyens de mémorisation,

et en ce que lesdits premiers moyens de mémorisation frères contiennent les entiers e, n, b.

14. Dispositif selon les revendications 11 et 13, caractérisé en ce que le poste utilisateur frère comporte des seconds moyens de calcul frères analogues aux seconds moyens de calcul,

en ce que les entiers I, A, le message M et la signature chiffrée sont communiqués à ce poste utilisateur frère,

en ce que les seconds moyens de calcul frères sont propres à déterminer l'entier c par la relation c=h(y,M),

et en ce que les premiers moyens de calcul frères sont propres à établir un premier entier intermédiaire t égal à $y.(A^e.I)^c$ et un second entier intermédiaire u égal à l'élévation de z à la puissance e, puis sont propres à comparer les premiers et deuxièmes entiers intermédiaires t et u, le résultat de cette comparaison permettant de déterminer le caractère correct de la communication du message M.

15. Dispositif selon les revendications 12 et 13, caractérisé en ce que les premiers moyens de calcul frères sont aptes à effectuer l'opération inverse de la première opération, dite division et sont propres à effectuer la succession des étapes suivantes :

a) détermination d'un troisième entier intermédiaire t3 égal à l'élévation à la puissance c du produit $A^e.I$,

b) détermination d'un quatrième entier intermédiaire t4 égal à la division de 1 par t3,

c) détermination d'un cinquième entier intermédiaire t5 égal au produit de l'entier z élevé à la puissance e par l'entier intermédiaire t4,

d) détermination d'un sixième entier intermédiaire t6 égal à la valeur de la fonction auxiliaire h dans laquelle la première variable y1 est égale à l'entier t5 et dans laquelle la seconde variable y2 est égale au message M,

e) comparaison de l'entier t6 avec l'entier de condensation c, le résultat de cette comparaison permettant de déterminer le caractère correct de la communication du message.

16. Dispositif selon l'une des revendications 7 à 15, caractérisé en ce que la fonction auxiliaire h est une partie prédéterminée de la fonction OU EXCLUSIF des deux variables y1 et y2.

17. Dispositif selon l'une des revendications 7 à 15, caractérisé en ce que la fonction auxiliaire h est une partie prédéterminée d'une fonction de condensation g des deux variables y1 et y2.

18. Dispositif selon la revendication 17, caractérisé en ce que la fonction g est une fonction de condensation de type itératif.

19. Dispositif selon la revendication 17, caractérisé en ce que la fonction de condensation g comprend l'utilisation d'un algorithme du type à clé secrète en mode bouclé.

20. Dispositif selon l'une des revendications 5 à 20, prises en combinaison avec la revendication 13, caractérisé en ce que les premiers moyens de calcul sont propres à établir une première partie d'une clé de chiffrement dépendant de l'entier aléatoire x, cette première partie étant communiquée au poste utilisateur frère (PU'), les premiers moyens de calcul frères étant alors propres à établir à partir de ladite première partie et de l'entier s', frère de l'entier s, contenu dans les seconds moyens de mémorisation frères, la totalité de ladite clé de chiffrement.

21. Dispositif selon la revendication 20, caractérisé en ce que la première partie de la clé de chiffrement est égale à l'entier b élevé à la puissance x.

22. Dispositif selon la revendication 21, caractérisé en ce que la clé de chiffrement est égale à l'élévation à la puissance e.s' de ladite première partie.

23. Dispositif selon l'une des revendications 20 à 22, caractérisé en ce que les premiers moyens de calcul déterminent également la clé de chiffrement à partir de l'entier aléatoire x, des entiers auxiliaires A' et d'identification I' du poste utilisateur frère.

24. Dispositif selon la revendication 23, caractérisé en ce que la clé de chiffrement est égale à l'élévation à la puissance x du produit $A'^e.I'$.

**25.** Dispositif selon l'une des revendications 3 à 23, caractérisé en ce qu'il comporte une première station-autorité (AUT1) comprenant lesdits moyens de traitement supplémentaires (MTS) et communiquant les entiers e, n, b à une première famille (FAM1) de postes utilisateurs.

**26.** Dispositif selon la revendication 25, caractérisé en ce qu'il comporte une deuxième station-autorité (AUT2) comprenant des moyens de traitement supplémentaires frères et communiquant des entiers frères e2, n2, b2 à une deuxième famille (FAM2) de postes utilisateurs.

**27.** Dispositif selon les revendications 25 et 26 prises en combinaison, caractérisé en ce que la première station-autorité communique à la deuxième station-autorité une signature d'un message particulier dépendant des entiers e2, n2, b2, obtenue à l'aide des entiers e, n, b, et en ce que la deuxième station-autorité communique à la première station-autorité une signature d'un message particulier dépendant des entiers e, n, b, obtenue à l'aide des entiers e2, n2, b2.

**28.** Dispositif selon l'une des revendications 5 à 27, caractérisé en ce que la taille de l'entier aléatoire x est de 512 bits.

**29.** Dispositif selon l'une des revendications précédentes, caractérisé en ce que la taille de l'entier n est de 512 bits.

**30.** Dispositif selon l'une des revendications précédentes, caractérisé en ce que la taille de l'entier premier e est de 65 bits.

**31.** Dispositif selon les revendications 7 et 30, caractérisé en ce que la taille de l'entier de condensation c est de 64 bits.

**32.** Dispositif selon l'une des revendications précédentes, caractérisé en ce que la taille de l'entier b est de 512 bits.

**33.** Dispositif selon l'une des revendications précédentes, caractérisé en ce que la taille de l'entier s est de 64 bits.

**34.** Dispositif selon l'une des revendications précédentes, caractérisé en ce que, pour effectuer la première opération, dite produit, du type F.B. modulo n, F et B ayant des valeurs entières représentées par des mots numériques de nb bits, les premiers moyens de calcul effectuent la succession des étapes suivantes :

a) fractionnement de la variable F en J+1 mots de tb bits, $F_0$, ..., $F_i$, ..., $F_J$, tb étant un entier prédéterminé et J+1 un entier égal ou immédiatement supérieur au rapport nb/tb,

b) multiplication par la variable B de chacun des mots $F_i$, où i est un entier compris entre 0 et J,

c) addition au produit de cette multiplication d'un mot numérique de somme T de valeur égale à la somme cumulée des produits antérieurs réduite modulo n, la réduction modulo n du mot de somme T étant réalisée en lui soustrayant une quantité $d_i.n$, $d_i$ étant un mot numérique constitué des tb+1 bits de poids fort du mot de somme T, à chaque fois que le mot de somme T atteint une valeur supérieure ou égale à ladite quantité $d_i.n$.

**35.** Dispositif selon la revendication 34, caractérisé en ce que les premiers moyens de calcul comprennent des moyens de mémorisation auxiliaires pour mémoriser les informations définissant l'exponentiation modulo n d'un mot numérique, des moyens de calcul auxiliaires pour effectuer des opérations du type $T\pm r.n$, où r est un mot numérique $F_i$ ou $d_i$, et des moyens de commande de ces moyens de mémorisation et de ces moyens de calcul auxiliaires.

## Patentansprüche

**1.** Nachrichtentechnische Vorrichtung mit einer Benutzerstation (PU) mit einer Verarbeitungseinrichtung (MT), welche folgendes aufweist:

- erste Speichereinrichtungen (MM1) zum Speichern einer ersten ganzen Zahl e̲ sowie einer ganzzahligen Arbeitszahl n̲, wobei diese ganzzahlige Arbeitszahl sehr groß und gleich dem Produkt aus zwei ersten ganzen Zahlen p und q ist,

EP 0 346 180 B1

- erste Recheneinrichtungen (MC1) für die Gesamtmenge Zn von ganzen Zahlen modulo die ganzzahlige Arbeitszahl $\underline{n}$, wobei diese ersten Recheneinrichtungen ausgelegt sind, um interne Operationen in dieser Gesamtmenge auszuführen, beispielsweise eine erste Operation, nämlich eine Multiplikation, und eine zweite Operation, nämlich eine Potenzierung, wobei die ersten Recheneinrichtungen zur Chiffrierung von Daten mit Hilfe einer ganzzahligen Authentizitätszahl $\underline{V}$ geeignet sind, die zu der Benutzerstation (PU) gehört und aus der ersten ganzen Zahl $\underline{e}$ unter der Voraussetzung der Kenntnis der Zerlegung von $\underline{n}$ in Faktoren als Produkt aus p und q bestimmbar ist,

dadurch gekennzeichnet,

- daß der Rest aus der Division des Produkts (p-1)·(q-1) durch die ganze Zahl $\underline{e}$ von Null verschieden ist,
- daß die ersten Speichereinrichtungen (MM1) sich zur Speicherung einer gewählten ganzen Zahl $\underline{b}$ in der Weise eignen, daß $\underline{b}$ modulo p ein Generator für die Gesamtmenge Zp∗ von ganzen Zahlen modulo p ist, die nicht Null sind, und daß $\underline{b}$ modulo q ein Generator für die Gesamtmenge Zq∗ von ganzen Zahlen modulo q ist, die nicht Null sind,
- daß die Benutzerstation (PU) außerdem zweite Speichereinrichtungen (MM2) aufweist, die sich zur Speicherung einer sehr großen ganzen Zahl $\underline{s}$ eignen, die zu der Benutzerstation (PU) gehört,
- und daß die ersten Recheneinrichtungen (MC1) sich dazu eignen, eine ganzzahlige Hilfszahl $\underline{A}$ zu bilden, welche als das Produkt aus $\underline{V}$ und der ganzen Zahl $\underline{b}$ in der s-ten Potenz definiert ist,

so daß es möglich ist, daß die Benutzerstation (PU) die ganzzahlige Hilfszahl $\underline{A}$ zum Nachweis ihrer Authentizität übertragen kann, ohne daß diese Übertragung die Bestimmung des Authentizitätswerts $\underline{V}$ gestattet.

2. Vorrichtung nach Anspruch 1,
dadurch gekennzeichnet,
daß die Benutzerstation (PU) einen Sicherheitsbereich (ENSE) aufweist, innerhalb dessen sich zumindest die ersten Recheneinrichtungen (MC1) und die zweiten Speichereinrichtungen (MM2) befinden.

3. Vorrichtung nach einem der Ansprüche 1 und 2,
dadurch gekennzeichnet,
daß sie zusätzliche Verarbeitungseinrichtungen (MTS) aufweist, welche geeignet sind, die beiden ersten ganzen Zahlen zur Faktorenzerlegung p und q zu erzeugen, um die ganzzahlige Arbeitszahl $\underline{n}$ sowie die ganzen Zahlen $\underline{e}$ und $\underline{b}$ zu erzeugen,
daß die zusätzlichen Verarbeitungseinrichtungen (MTS) geeignet sind, die inverse Operation, nämlich die Wurzelbildung, der zweiten Operation und die zur ersten Operation inverse Operation der Division vorzunehmen, und daß die zusätzlichen Verarbeitungseinrichtungen geeignet sind, um die ganzzahlige Authentizitätszahl $\underline{V}$ aus einer der Benutzerstation eigenen ganzzahligen Identifizierungszahl $\underline{I}$ zu bestimmen, die zu der Benutzerstation gehört, wobei $\underline{V}$ gleich der Division der ganzen Zahl 1durch die e-te Wurzel aus $\underline{I}$ ist.

4. Vorrichtung nach Anspruch 3,
dadurch gekennzeichnet,
daß die ganzzahlige Identifizierungszahl $\underline{I}$ von einem Vielfachen einer ganzen Zahl $\underline{k}$, die nicht gleich 1 ist, in der e-ten Potenz verschieden ist.

5. Vorrichtung nach Anspruch 4,
dadurch gekennzeichnet,
daß die Benutzerstation darüberhinaus Einrichtungen (MG) zum Erzeugen einer ganzzahligen Zufallszahl $\underline{x}$ aufweist, die sich innerhalb des Sicherheitsbereichs (ENSE) befindet.

6. Vorrichtung nach Anspruch 5,
dadurch gekennzeichnet,
daß die ganzzahlige Zufallszahl $\underline{x}$ sehr groß ist.

7. Vorrichtung nach Anspruch 5 oder 6,
dadurch gekennzeichnet,
daß die ersten Speichereinrichtungen geeignet sind, um Informationen zu speichern, welche eine Hilfsfunktion $\underline{h}$ mit zwei Variablen y1 und y2 definieren,
und daß die Benutzerstation zweite Recheneinrichtungen (MC2) für die Gesamtmenge von ganzen Zahlen modulo $\underline{n}$ aufweist, die sich zur Bildung einer ganzzahligen Kompressionszahl $\underline{c}$ in der Weise eignen,

14

daß der Rest aus der Division von $\underline{c}$ durch $\underline{e}$ nicht $\underline{0}$ ist und als der Wert der Funktion $\underline{h}$ definiert wird, die bei der ersten Variablen y1 eine ganze Zahl $\underline{y}$ ergibt, die von der ganzzahligen Hilfszahl $\underline{x}$ abhängig ist, und die bei der zweiten Variablen y2 eine Nachricht $\underline{M}$ ergibt, wobei die Hilfsfunktion $\underline{h}$ nun gegenüber der Nachricht $\underline{M}$ keine Doppeldeutigkeit aufweist und gegenüber dem Paar aus der ganzen Zahl $\underline{y}$ und der Nachricht $\underline{M}$ quasi-eineindeutig ist.

8. Vorrichtung nach Anspruch 7,
dadurch gekennzeichnet,
daß die Größe der ganzzahligen Kompressionszahl $\underline{c}$ kleiner als die Größe der ganzen Zahl $\underline{e}$ ist.

9. Vorrichtung nach einem der Ansprüche 7 und 8,
dadurch gekennzeichnet,
daß die ganze Zahl $\underline{y}$ gleich dem Wert von $\underline{x}$ in der e-ten Potenz ist.

10. Vorrichtung nach einem der Ansprüche 7 bis 9,
dadurch gekennzeichnet,
daß die ersten Recheneinrichtungen geeignet sind, eine ganze Zahl $\underline{z}$ zu bilden, die als das Produkt aus $\underline{x}$ und der ganzen Zahl $\underline{b}$ potenziert mit $s \cdot c$ definiert ist.

11. Vorrichtung nach Anspruch 10,
dadurch gekennzeichnet,
daß die beiden ganzen Zahlen $\underline{y}$ und $\underline{z}$ eine erste chiffrierte Kennung der Nachricht $\underline{M}$ bilden.

12. Vorrichtung nach Anspruch 10,
dadurch gekennzeichnet,
daß die beiden ganzen Zahlen $\underline{z}$ und $\underline{c}$ eine zweite chiffrierte Kennung der Nachricht $\underline{M}$ bilden.

13. Vorrichtung nach einem der vorhergehenden Ansprüche,
dadurch gekennzeichnet,
daß sie eine Zwillings-Benutzerstation aufweist, welche erste Zwillings-Recheneinrichtungen analog zu den ersten Recheneinrichtungen sowie erste und zweite Zwillings-Speichereinrichtungen analog zu den ersten und zweiten Speichereinrichtungen aufweist,
und daß die ersten Zwillings-Recheneinrichtungen die ganzen Zahlen $\underline{e}$, $\underline{n}$, $\underline{b}$ enthalten.

14. Vorrichtung nach den Ansprüchen 11 und 13,
dadurch gekennzeichnet,
daß die Zwillings-Benutzerstation zweite Zwillings-Recheneinrichtungen analog zu den zweiten Recheneinrichtungen aufweist,
daß die ganzen Zahlen $\underline{I}$ und $\underline{A}$, die Nachricht $\underline{M}$ und die chiffrierte Kennung an diese Zwillings-Benutzerstation übermittelt werden,
daß die zweiten Zwillings-Recheneinrichtungen die ganze Zahl $\underline{c}$ durch die Beziehung c = h(y,M) bestimmen können, und daß die ersten Zwillings-Recheneinrichtungen geeignet sind, eine erste ganzzahlige Zwischenzahl $\underline{t}$ gleich $y \cdot (A^e \cdot I)^c$ und eine zweite ganzzahlige Zwischenzahl $\underline{u}$ gleich $\underline{z}$ in der e-ten Potenz zu bilden, und weiterhin geeignet sind, die ersten und zweiten ganzzahligen Zwischenzahlen $\underline{t}$ und $\underline{u}$ miteinander zu vergleichen, wobei das Ergebnis dieses Vergleichs die Bestimmung der Richtigkeit der Übermittlung der Nachricht $\underline{M}$ gestattet.

15. Vorrichtung nach den Ansprüchen 12 und 13,
dadurch gekennzeichnet,
daß die ersten Zwillings-Recheneinrichtungen geeignet sind, die zur ersten Operation inverse Operation der Division auszuführen und nacheinander die folgenden Schritte vorzunehmen:
a) Bestimmung einer dritten ganzzahligen Zwischenzahl t3 gleich $\underline{c}$ potenziert mit dem Produkt $A^e \cdot I$,
b) Bestimmung einer vierten ganzzahligen Zwischenzahl t4 gleich der Division von 1 durch t3,
c) Bestimmung einer fünften ganzzahligen Zwischenzahl t5 gleich dem Produkt aus der ganzen Zahl $\underline{z}$ in der e-ten Potenz und der ganzzahligen Zwischenzahl t4,
d) Bestimmung einer sechsten ganzzahligen Zwischenzahl t6 gleich dem Wert der Hilfsfunktion $\underline{h}$, bei welcher die erste Variable y1 gleich der ganzen Zahl t5 ist und bei welcher die zweite Variable y2 gleich der Nachricht $\underline{M}$ ist,
e) Vergleich der ganzen Zahl t6 mit der ganzzahligen Kompressionszahl $\underline{c}$, wobei das Ergebnis dieses Vergleichs die Bestimmung der Richtigkeit der Übermittlung der Nachricht gestattet.

16. Vorrichtung nach einem der Ansprüche 7 bis 15,
dadurch gekennzeichnet,
daß die Hilfsfunktion h̲ ein vorgegebener Teil der exklusiven ODER-Funktion der beiden Variablen y1 und y2 ist.

17. Vorrichtung nach einem der Ansprüche 7 bis 15,
dadurch gekennzeichnet,
daß die Hilfsfunktion h̲ ein vorgegebener Teil einer Kompressionsfunktion q̲ der beiden Variablen y1 und y2 ist.

18. Vorrichtung nach Anspruch 17,
dadurch gekennzeichnet,
daß die Funktion g̲ eine Funktion der iterativen Kompression ist.

19. Vorrichtung nach Anspruch 17,
dadurch gekennzeichnet,
daß die Kompressionsfunktion g die Verwendung eines Algorithmus in der Art eines Geheimschlüssels im Schleifenmodus umfaßt.

20. Vorrichtung nach einem der Ansprüche 5 bis 19 in Verbindung mit Anspruch 13,
dadurch gekennzeichnet,
daß die ersten Recheneinrichtungen geeignet sind, einen ersten Teil eines Chiffrierschlüssels in Abhängigkeit von der ganzzahligen Zufallszahl x̲ zu bilden, wobei dieser erste Teil an die Zwillings-Benutzerstation (PU') übermittelt wird, und wobei die ersten Zwillings-Recheneinrichtungen dann geeignet sind, aus diesem ersten Teil und der ganzen Zahl s̲', die der ganzen Zahl s̲ entspricht und in den zweiten Zwillings-Speichereinrichtungen enthalten ist, diesen Chiffrierschlüssel insgesamt zu bilden.

21. Vorrichtung nach Anspruch 20,
dadurch gekennzeichnet,
daß der erste Teil des Chiffrierschlüssels gleich der ganzen Zahl b̲ in der x-ten Potenz ist.

22. Vorrichtung nach Anspruch 21,
dadurch gekennzeichnet,
daß der Chiffrierschlüssel gleich dem ersten Teil potenziert mit e·s' ist.

23. Vorrichtung nach einem der Ansprüche 20 bis 22,
dadurch gekennzeichnet,
daß die ersten Recheneinrichtungen auch den Chiffrierschlüssel aus der ganzzahligen Zufallszahl x̲, den ganzzahligen Hilfszahlen A̲' und der Identifizierung I̲' der Zwillings-Benutzerstation bestimmen.

24. Vorrichtung nach Anspruch 23,
dadurch gekennzeichnet,
daß der Chiffrierschlüssel gleich x̲ potenziert mit dem Produkt $A'^{e \cdot I'}$ ist.

25. Vorrichtung nach einem der Ansprüche 3 bis 23,
dadurch gekennzeichnet,
daß sie eine erste übergeordnete Station (AUT1) aufweist, welche die zusätzlichen Verarbeitungseinrichtungen (MTS) enthält und die ganzen Zahlen e̲, n̲, b̲ an eine zweite Gruppe (FAM1) von Benutzerstationen übermittelt.

26. Vorrichtung nach Anspruch 25,
dadurch gekennzeichnet,
daß sie eine zweite übergeordnete Station (AUT2) aufweist, welche zusätzliche Zwillings-Verarbeitungseinrichtungen enthält und die ganzzahlige Zwillingszahlen e2, n2, b2 an eine zweite Gruppe (FAM2) von Benutzerstationen übermittelt.

27. Vorrichtung nach den Ansprüchen 25 und 26 in Kombination,
dadurch gekennzeichnet,

daß die erste übergeordnete Station an die zweite übergeordnete Station eine Kennung für eine besondere Nachricht in Abhängigkeit von den ganzen Zahlen e2, n2, b2 übermittelt, die mit Hilfe der ganzen Zahlen $\underline{e}$, $\underline{n}$, $\underline{b}$ erhalten wurden,

und daß die zweite übergeordnete Station an die erste übergeordnete Station eine Kennung für eine bestimmte Nachricht in Abhängigkeit von den ganzen Zahlen $\underline{e}$, $\underline{n}$, $\underline{b}$ übermittelt, die mit Hilfe der ganzen Zahlen e2, n2, b2 erhalten wurden.

28. Vorrichtung nach einem der Ansprüche 5 bis 27,
dadurch gekennzeichnet,
daß die Größe der ganzzahligen Zufallszahl $\underline{x}$ 512 Bit beträgt.

29. Vorrichtung nach einem der vorhergehenden Ansprüche,
dadurch gekennzeichnet,
daß die Größe der ganzen Zahl $\underline{n}$ 512 Bit beträgt.

30. Vorrichtung nach einem der vorhergehenden Ansprüche,
dadurch gekennzeichnet,
daß die Größe der ersten ganzen Zahl $\underline{e}$ 65 Bit beträgt.

31. Vorrichtung nach den Ansprüchen 7 und 30,
dadurch gekennzeichnet,
daß die Größe der ganzzahligen Kompressionszahl $\underline{c}$ 64 Bit beträgt.

32. Vorrichtung nach einem der vorhergehenden Ansprüche,
dadurch gekennzeichnet,
daß die Größe der ganzen Zahl $\underline{b}$ 512 Bit beträgt.

33. Vorrichtung nach einem der vorhergehenden Ansprüche,
dadurch gekennzeichnet,
daß die Größe der ganzen Zahl $\underline{s}$ 64 Bit beträgt.

34. Vorrichtung nach einem der vorhergehenden Ansprüche,
dadurch gekennzeichnet,
daß zur Ausführung der ersten Operation, nämlich der Multiplikation vom Typ F·B modulo $\underline{n}$, wobei $\underline{F}$ und $\underline{B}$ ganzzahlige Werte aufweisen, die durch die digitalen Wörter von nb Bit repräsentiert werden, die ersten Recheneinrichtungen nacheinander die folgenden Schritte ausführen:
a) Zerlegung der Variablen $\underline{F}$ in J+1 Wörter zu tb Bits, $F_0$, ..., $F_i$, ... $F_J$, wobei tb eine vorgegebene ganze Zahl ist und j+1 eine ganze Zahl ist, die gleich dem Verhältnis von nb/tb ist oder unmittelbar darüber liegt,
b) Multiplikation jedes Wortes $F_i$ mit der Variablen $\underline{B}$, wobei $\underline{i}$ eine ganze Zahl zwischen $\underline{0}$ und $\underline{J}$ ist,
c) Addition eines digitalen Wortes mit dem Wert $\underline{T}$, wobei dieser Wert gleich der kumulierten Summe der vorherigen Produkte reduziert modulo $\underline{n}$ ist, zum Produkt dieser Multiplikation, wobei die Reduktion modulo $\underline{n}$ des Wortes mit der Summe $\underline{T}$ dadurch erfolgt, daß von dieser eine Größe $d_i$·n abgezogen wird, wobei $d_i$ ein digitales Wort ist, das aus den höchstwertigen tb+1 Bits des Wortes mit der Summe $\underline{T}$ besteht, sobald das Wort mit der Summe $\underline{T}$ einen Wert erreicht, der größer als der oder gleich dem Wert von $d_i$·n ist.

35. Vorrichtung nach Anspruch 34,
dadurch gekennzeichnet,
daß die ersten Recheneinrichtungen Hilfsspeichereinrichtungen zum Speichern der Informationen, welche die Exponentenbildung modulo $\underline{n}$ eines digitalen Wortes definieren, sowie Hilfsrecheneinrichtungen zur Ausführung von Operationen vom Typ T±r·n, wobei r ein digitales Wort $F_i$ bzw. $d_i$ ist, und Einrichtungen zur Steuerung dieser Hilfsspeichereinrichtungen und Hilfsrecheneinrichtungen aufweisen.

**Claims**

1. Communication device, containing a user station (PU) provided with processing means (MT) comprising:
- first storage means (MM1) for storing a first integer e and an operating integer n, this operating integer

17

being of very large magnitude and equal to the product of the two first integers p and q,

- first calculation means (MC1) for the set Zn of integers modulo the operating integer n, these first calculation means being capable of carrying out internal operations in this set, such that a first operation, the so-called product, and a second operation, the so-called exponentiation, the said first calculation means being designed for data coding, with the aid of a validation integer V peculiar to the first user station (PU) and which may be determined from the first integer e, subject to knowing the factorization of n as a product of p and q,

characterised in that the remainder of the division of the product (p-1) . (q-1) by the integer e is other than 0,

- in that the first storage means (MM1) are designed for the storage of a chosen integer b such that b modulo p is the generator of the set Zp* of the non-zero integers modulo p and such that b modulo q is generator of the set Zq* of the non-zero integers modulo q,

- in that the user station (PU) further comprises second storage means (MM2) designed for the storage of an integer s of large magnitude peculiar to the user station (PU),

- and that the said first calculation means (MC1) are designed for the generation of an auxiliary whole number A defined as being the product of V and the integer b raised to the power s, which enables the user station (PU) to communicate the auxiliary integer A in order to validate itself without this communication allowing the validation value V to be determined.

2. Device according to claim 1, characterised in that the user station (PU) contains a security cabinet (ENSE) inside which are housed at least the first calculation means (MC1) and the second storage means (MM2).

3. Device according to one of the claims 1 and 2, characterised in that it contains supplementary processing means (MTS) capable of generating the two first factorization integers p and q, to establish the operating integer n and the integers e and b,

in that the supplementary processing means (MTS) are capable of implementing the inverse operation, that is the root, of the said second operation and the inverse operation, that is the division of the said first operation,

in that the supplementary processing means are designed for the determination of the validation integer V from an identification integer I peculiar to the user station, V being equal to the division of the integer 1 by the $e^{th}$ root of I.

4. Device according to claim 3, characterised in that the identification integer I is other than a multiple of an integer k, other than 1, raised to the power e.

5. Device according to claim 4, characterised in that the user station further comprises means (MG) for generating a random number x located inside the security cabinet (ENSE).

6. Device according to claim 5, characterised in that the random number x is of very large magnitude.

7. Device according to claim 5 or 6, characterised in that the first storage means are designed for the storage of data defining an auxiliary function h having two variables y1 and y2,

in that the user station (PU) contains second calculation means (MC2) for the set of whole numbers modulo n designed for the generation of a padding integer c, such that the remainder of the division of c by e is other than 0, and defined as being the value of the function h with, for the first variable y1, an integer y depending on the random number x, and for the second variable y2 a message M, the auxiliary function h then being deprived of ambiguity in relation to the message M and quasi-one-to-one in relation to the pair formed by the integer y and the message M.

8. Device according to claim 7, characterised in that the magnitude of the padding number c is less than the magnitude of the integer e.

9. Device according to one of the claims 7 and 8, characterised in that the integer y is the exponentiation of x to the power e.

10. Device according to one of the claims 7 to 9, characterised in that the first calculation means are designed for the generation of an integer z defined as being the product of x and the integer b raised to the power s.c.

**11.** Device according to claim 10, characterised in that the two integers y and z constitute a first coded signature of the message M.

**12.** Device according to claim 10, characterised in that the two integers z and c constitute a second coded signature of the message M.

**13.** Device according to one of the preceding claims, characterised in that it contains a twin user station comprising twin first calculation means similar to the first calculation means, and twin first and second storage means similar to the first and second storage means,

in that the said first twin storage means contain the integers e, n, b.

**14.** Device according to claims 11 and 13, characterised in that the twin user station contains twin second calculation means similar to the second calculation means.

in that the integers 1, A, the message M and the coded signature are communicated to this twin user station,

in that the twin second calculation means are designed for the determination of the integer c from the relationship c = h (y,M),

in that the twin first calculation means are designed for the generation of a first intermediate integer t equal to $y.(A^e.l)^c$ and a second intermediate integer u equal to the exponentiation of z to the power e, then are designed for the comparison of the firs and second intermediate integers t and u, the result of this comparison enabling the correct character of the communication of the message M to be determined.

**15.** Device according to claims 12 and 13, characterised in that the twin first calculation means are capable of implementing the inverse operation of the first operation, that is division, and are designed to carry out the following sequence of steps:

a) determination of a third intermediate integer t3 equal to the exponentiation to the power c of the product $A^e.l$,

b) determination of a fourth intermediate integer t4 equal to the division of 1 by t3,

c) determination of a fifth intermediate integer t5 equal to the product of the integer z raised to the power e by the intermediate integer t4,

d) determination of a sixth intermediate integer t6 equal to the value of the auxiliary function h in which the first variable y1 is equal to the integer t5 and in which the second variable y2 is equal to the message M,

e) comparison between the integer t6 and the padding integer c, the result of this comparison enabling the correct character of the message communication to be determined.

**16.** Device according to one of the claims 7 to 15, characterised in that the auxiliary function h is a predetermined component of the EXCLUSIVE OR function of the two variables y1 and y2.

**17.** Device according to one of the claims 7 to 15, characterised in that the auxiliary function h is a predetermined component of a padding function g of the two variables y1 and y2.

**18.** Device according to claim 17, characterised in that the padding function is a condensation function of the iterative type.

**19.** Device according to claim 17, characterised in that the padding function g includes the use of an algorithm of the hidden cipher, recursive mode type.

**20.** Device according to one of the claims 5 to 20, taken in combination with claim 13, characterised in that the first calculation means are designed to generate a first component of a coding cipher dependent upon the random number x, this first component being communicated to the twin user station (PU'), the twin first calculation means then being used to generate the whole of the said coding cipher from the said first component and the integer s', twin of the integer s, contained in the twin second storage means.

**21.** Device according to claim 20, characterised in that the first component of the coding cipher is equal to the integer b raised to the power x.

**22.** Device according to claim 21, characterised in that the coding cipher is equal to the exponentiation to the power e.s' of the said first component.

23. Device according to one of the claims 20 to 22, characterised in that the first calculation means also determine the coding cipher from the random number x, the auxiliary integers A' and the identification I' of the twin user station.

24. Device according to claim 23, characterised in that the coding cipher is equal to the exponentiation to the power x of the product $A'^e.I'$.

25. Device according to one of the claims 3 to 23, characterised in that it contains a first control station (AUT1) comprising the said supplementary processing means (MTS) and communicating the integers e, n, b to a first family (FAM1) of user stations.

26. Device according to claim 25, characterised in that it contains a second control station (AUT2) comprising twin supplementary processing means and communicating twin integers e2, n2, b2 to a second family (FAM2) of user stations.

27. Device according to one of the claims 25 and 26, characterised in that the first control station communicates to the second control station a signature of a special message dependent upon the integers e2, n2, b2, obtained with the aid of the integers e, n, b, and in that the second control station communicates to the first control station a signature of a special message dependent upon the integers e, n, b, obtained with the aid of the integers e2, n2, b2.

28. Device according to one of the claims 5 to 27, characterised in that the magnitude of the random number x is 512 bits.

29. Device according to one of the preceding claims, characterised in that the magnitude of the integer n is 512 bits.

30. Device according to one of the preceding claims, characterised in that the magnitude of the first integer e is 65 bits.

31. Device according to claims 7 and 30, characterised in that the magnitude of the padding integer c is 64 bits.

32. Device according to one of the preceding claims, characterised in that the magnitude of the integer b is 512 bits.

33. Device according to one of the preceding claims, characterised in that the magnitude of the integer s is 64 bits.

34. Device according to one of the preceding claims, characterised in that, to effect the first operation, that is the product of the type F.B. modulo n, F and B having whole values represented by digital words of nb bits, the first calculation means carrying out the following sequence of steps:
   a) splitting of the variable F into J+1 words of tb bits, $F_0$, ..., $F_i$, ..., $F_J$, tb being a predetermined integer and J+1 an integer equal to or immediately above the ratio nb/tb,
   b) multiplication of each of the words $F_i$, by the variable B, where i is an integer between 0 and J,
   c) addition to the product of this multiplication of a digital word of sum T of a value equal to the cumulative sum of the previous products, reduced modulo n, the modulo n reduction of the word of sum T being obtained by subtracting from it a quantity $d_i.n$, $d_i$ being a digital word made up of tb+1 most significant bits of the word of sum T, each time the word of sum T reaches a value above or equal to the said quantity $d_i.n$.

35. Device according to claim 34, characterised in that the first calculation means contain auxiliary storage means to store the data defining the exponentiation modulo n of a digital word, auxiliary calculation means to effect operations of the type $T \pm r.n$, where r is a digital word $F_i$ or $d_i$, and means for controlling these storage means and this auxiliary calculation means.

PU

PU'

FAM 1

AUT 1

## FIG.1

PU

PU'

PU 2

PU2'

FAM 1

FAM 2

AUT1

AUT2

## FIG.8

MC1    ENSE    MC    MC2

MM1

MM2

MM

MG

MT

PU

## FIG. 2

AUT1

MTS

I

V

e

n

b

## FIG. 3

$$n = p \cdot q, e, b$$

choix de
I

$$V = 1 \bigg/ \sqrt[e]{I}$$

b

choix de
s

$$A = V b^{s}$$

PU

AUT 1

# FIG.4

$$\rightarrow x \qquad 500$$

$$y = x^e \qquad 501$$

$$A, I, h \quad s, b, e$$

$$M$$

$$c = h(y, M) \qquad 502$$

$$z = x b^{sc} \qquad 503$$

$$\text{envoi de } y, z, M, I, A \qquad 504$$

PU

$$\text{réception de } y, z, M, I, A \qquad 505$$

$$c = h(y, M) \qquad 506$$

$$A', I', h, s' \quad b, e$$

$$t = y(A^e I f \qquad 507$$

$$u = z^e \qquad 508$$

PU'

$$u = t? \qquad 509$$

oui      non

correct     510

anomalie     511

## FIG.5

$\longrightarrow x$   600

$y = x^e$   601

A , I , h
s , b , e

M

$c = h(y, M)$   602

$z = x b^{sc}$   603

envoi  de  c, z, M, I, A   604

PU

réception  de c, z, M , I , A   605

PU'

$t3 = (A^e I)^c$   606

$t4 = 1/t3$   607

A', I', h
s', b, e

$t5 = t4.z^e$   608

$t6 = h(t5, M)$   609

$c = t6?$   610

oui          non

correct   611          anomalie   612

# FIG.6

$$FIG.7$$

26

$$FIG.9$$